# EUROPÄISCHE PATENTANMELDUNG

(11) **EP 3 584 896 A1**
(43) Veröffentlichungstag der Anmeldung: **25.12.2019**
(21) Anmeldenummer: 19175522.2
(22) Anmeldetag: 21.05.2019
(51) Int. Cl.: H02B 1/30

(54) **SCHALTSCHRANK**

(30) Priorität: 18.06.2018 DE 102018114577
(71) Anmelder: Cartesy GmbH, 84453 Mühldorf Bayern (DE)
(72) Erfinder: FEMBÖCK, Josef, 84524 Neuötting (DE)
(74) Vertreter: Lichtnecker, Markus Christoph

(57) **Zusammenfassung**

Die Erfindung betrifft ein Gehäuse eines Schaltschranks, umfassend einen verschließbaren Deckel, und eine Aussparung für eine Steuerungseinheit.

## Beschreibung

Die Erfindung betrifft ein Gehäuse eines Schaltschranks, umfassend einen verschließbaren Deckel.

Schaltschränke sind grundsätzlich bekannt. Im Inneren des Schaltschrankes sind meist ein Hauptschalter, ein Netzschalter, mehrere Schutzsicherungen und eine Steuerungseinheit angeordnet.

Diese Bauteile sind von einem Gehäuse umgeben. Das Gehäuse ist mit einem Deckel versehen.

Der Begriff Deckel ist breit zu verstehen. So kann ein Deckel im geschlossenen Zustand beispielsweise eine einzelne Seite oder einen Abschnitt einer Seite des Gehäuses bilden. Beispielsweise kann ein Deckel an einem Scharnier schwenkbar gelagert sein. Der Deckel kann auf diese Weise aufgeklappt werden.

Der Deckel kann jedoch auch mehrere Seiten des Gehäuses umfassen. Beispielsweise kann der Deckel als einseitig offener Kasten ausgebildet sein, der als Abdeckung befestigt wird. Der Kasten kann insbesondere aufgesetzt und verschraubt werden.

Müssen Bauteile im Inneren des Schaltschranks ausgetauscht werden, z.B. aufgrund eines Defekts und/oder zu Wartungszwecken, muss bei herkömmlichen Schaltschrankgehäusen der Deckel geöffnet, insbesondere demontiert, werden.

Dies ist mit einem vergleichsweise hohen Aufwand verbunden.

Bauteile wie z.B. das Netzteil müssen relativ selten gewartet bzw. ausgetauscht werden. Die Steuerungseinheit ist hingegen deutlich störungsanfälliger. Auch müssen von Zeit zu Zeit Updates aufgespielt werden.

Es ist daher eine Aufgabe der Erfindung, ein Gehäuse eines Schaltschranks sowie einen Schaltschrank zu schaffen, das/der einen schnellen Austausch wartungsintensiver Bauteile ermöglicht.

Die Lösung dieser Aufgabe erfolgt durch die Gegenstände der unabhängigen Ansprüche.

Erfindungsgemäß umfasst das Gehäuse eines Schaltschranks einen verschließbaren Deckel und eine Aussparung für eine Steuerungseinheit.

Insbesondere kann durch die Aussparung eine Steuerungseinheit in das Gehäuse eingebracht bzw. wieder ausgebracht werden. Die Steuerungseinheit umfasst insbesondere eine Elektronik, vorzugsweise eine Platine, eine Leiterplatte, eine ECU, ein ECM, einen Mikrocontroller und/oder einen Speicher.

Durch diese Aussparung wird ein zusätzlicher Zugriff ins Innere des Gehäuses ermöglicht. Zur Wartung bzw. zum Austausch der Steuerungseinheit muss der Deckel des Gehäuses somit nicht abgenommen werden. Der eigentliche Schaltschrank bleibt folglich geschlossen.

Eine Gefahr für einen Benutzer besteht dabei nicht, da die Steuerungseinheit im Niederspannungsbereich arbeitet.

Es war überraschend, dass durch eine zusätzliche Aussparung im Gehäuse ein schneller Austausch wartungsintensiver Bauteile ermöglicht wird. Stillstandszeiten können auf diese Weise reduziert und damit Kosten gespart werden. Weiterbildungen der Erfindung sind auch den abhängigen Ansprüchen, der Beschreibung sowie den beigefügten Zeichnungen zu entnehmen.

Gemäß einer Ausführungsform ist die Aussparung derart ausgebildet, dass bei verschlossenem Deckel ein Zugriff in einen inneren Teilbereich des Gehäuses ermöglicht ist.

Bei dem Teilbereich kann es sich vorzugsweise um einen Niederspannungsbereich handeln. Vorzugsweise kann durch die Aussparung daher lediglich auf einen Bereich mit Niederspannung zugegriffen werden. Insbesondere auf den Hochspannungsbereich kann durch die Aussparung nicht zugegriffen werden. Hierzu muss, wie herkömmlich, der Deckel geöffnet werden.

Die Elektronik, insbesondere die Steuerungseinheit, kann jedoch entnommen werden, ohne den Schaltschrank selbst öffnen zu müssen.

Nach einer weiteren Ausführungsform ist die Aussparung im Deckel vorgesehen. Insbesondere kann die Aussparung an einer Vorderseite des Gehäuses angeordnet sein. Die Aussparung ist somit leicht zugänglich. Alternativ kann die Aussparung jedoch auch an einer anderen Stelle des Gehäuses vorgesehen sein, beispielsweise seitlich.

Gemäß einer weiteren Ausführungsform ist im Bereich der Aussparung eine Dichtung vorgesehen. Die Dichtung kann z.B. als Gummi- oder Silikondichtung ausgebildet sein. Alternativ oder zusätzlich ist auch eine Folie möglich, welche über eine in die Aussparung eingesetzte Steuerungseinheit geklebt wird.

Das Gehäuse kann demnach, trotzt Aussparung, wasserdicht ausgebildet sein. So kann das Gehäuse beispielsweise in Waschhallen und/oder Waschstraßen eingesetzt werden.

Generell kann das Gehäuse in sämtlichen Bereichen, insbesondere im Bereich der Werkstattausrüstung, eingesetzt werde. Je nach Anwendung kann das Gehäuse dabei optional auch wasserdicht ausgebildet sein.

Nach einer weiteren Ausführungsform ist im Bereich der Aussparung ein Adapter vorgesehen. Der Adapter kann ein- oder mehrteilig ausgebildet sein. Zumindest ein Teil des Adapters kann fest mit dem Gehäuse verbunden sein und/oder in die Aussparung eingesetzt sein. Der Adapter kann die Aussparung insbesondere verkleinern.

Die Steuerungseinheit kann in den Adapter eingesetzt und insbesondere darin gehalten werden.

Gemäß einer weiteren Ausführungsform umfasst der Adapter wenigstens einen Reedschalter. Vorzugsweise umfasst der Reedschalter einen verschiebbaren Magneten. Dies ermöglicht insbesondere eine wasserdichte Bedienung.

Vorzugsweise sind mehrere, z.B. zwei, Reedschalter vorgesehen. Diese können insbesondere im Bereich der Stirnseiten der Steuerungseinheit bzw. der Aussparung angeordnet sein.

Nach einer weiteren Ausführungsform umfasst der Adapter wenigstens eine Kontaktierungsvorrichtung für eine Steuerungseinheit. Die Steuerungseinheit kann über die Kontaktierungsvorrichtung mit den weiteren Bauteilen des Schaltschranks elektronisch verbunden werden.

Die Erfindung betrifft auch einen Schaltschrank, umfassend ein erfindungsgemäßes Gehäuse und eine Steuerungseinheit.

Der Schaltschrank kann einen Hauptschalter, einen Netzschalter und/oder wenigstens ein Schütz, vorzugsweise zumindest ein Schütz für den Hauptschalter und zumindest ein Schütz für den Netzschalter, umfassen.

Diese Bauteile sind vorzugsweise in einem Hochspannungsbereich im Inneren des Gehäuses angeordnet. Vorzugsweise kann dieser Hochspannungsbereich nur durch Öffnen des Deckels erreicht werden.

Über die Aussparung kann hingegen nur auf den Niederspannungsbereich, z.B. die Steuerungseinheit, zugegriffen werden. Dadurch können mögliche Gefahren gering gehalten werden.

Gemäß einer Ausführungsform ist die Steuerungseinheit kurzschlussfest, selbstüberwachend und/oder wasserdicht ausgebildet.

Insbesondere kann die Steuerungseinheit eine, z.B. austauschbare, Sicherung umfassen. Die Steuerungseinheit kann vorzugsweise redundant ausgebildet sein.

Optional kann eine, insbesondere optische und/oder akustische, Statusanzeige vorgesehen sein. Beispielsweise kann eine LED-Anzeige, z.B. mit 24 Bit, vorgesehen sein. Der Zustand des Systems, insbesondere Störungen, können damit einfach von einem Benutzer erfasst werden.

Die Steuerungseinheit kann auch eine Ausgabeeinheit umfassen, um die Daten kabelgebunden oder kabellos, insbesondere mittels mobiler Übertragungstechniken wie UMTS, GSM, LTE, 5G, Bluetooth, Infrarot, WLAN oder dergleichen, an eine Auswerte- und/oder Anzeigevorrichtung, z.B. einen PC, Laptop, Smartphone oder Tablet, zu übertragen.

Die Steuerungsvorrichtung kann auch eine Dichtung, z.B. eine Gummi- und/oder Silikondichtung, umfassen. Auf diese Weise kann eine Abdichtung zur Aussparung geschaffen werden.

Gemäß einer Ausführungsform ist eine Befestigungsvorrichtung zum Befestigen der Steuerungseinheit in der Aussparung und/oder in einem Adapter im Bereich der Aussparung vorgesehen.

Die Befestigungsvorrichtung kann insbesondere eine Einhänge-, Klammer-, Klemm-, Steck-, Rast-, Magnet-, Zapfen- und/oder Schraubvorrichtung umfassen.

Eine Entriegelung der Steuerungseinheit kann vorzugsweise mittels eines Spezialwerkzeugs erfolgen, um insbesondere einen unbefugten Zugriff zu verhindern.

Die Erfindung betrifft auch ein Verfahren zur Entnahme einer Steuerungseinheit aus einem Gehäuse eines Schaltschranks, bei dem die Steuerungseinheit bei geschlossenem Deckel über eine Aussparung im Gehäuse entnommen wird.

Ferner betrifft die Erfindung ein Verfahren zur Aufnahme einer Steuerungseinheit in einem Gehäuse eines Schaltschranks, bei dem die Steuerungseinheit bei geschlossenem Deckel über eine Aussparung im Gehäuse eingesetzt wird.

Alle hier beschriebenen Ausführungsformen und Bauteile der Vorrichtungen sind insbesondere dazu ausgebildet, nach einem oder mehreren der hier beschriebenen Verfahren bedient zu werden. Ferner können alle hier beschriebenen Ausführungsformen der Vorrichtungen sowie alle hier beschriebenen Ausführungsformen der Verfahren jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Vorderansicht eines Adapters einer Ausführungsform eines erfindungsgemäßen Gehäuses eines Schaltschranks,
- Fig. 2: eine Vorderansicht einer Ausführungsform einer Steuerungseinheit,
- Fig. 3: eine Seitenansicht der Steuerungseinheit nach Fig. 2,
- Fig. 4: eine Vorderansicht einer Ausführungsform eines erfindungsgemäßen Schaltschranks ohne Steuerungseinheit, und
- Fig. 5: eine Vorderansicht des Schaltschranks gemäß Fig. 4 mit Steuerungseinheit.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

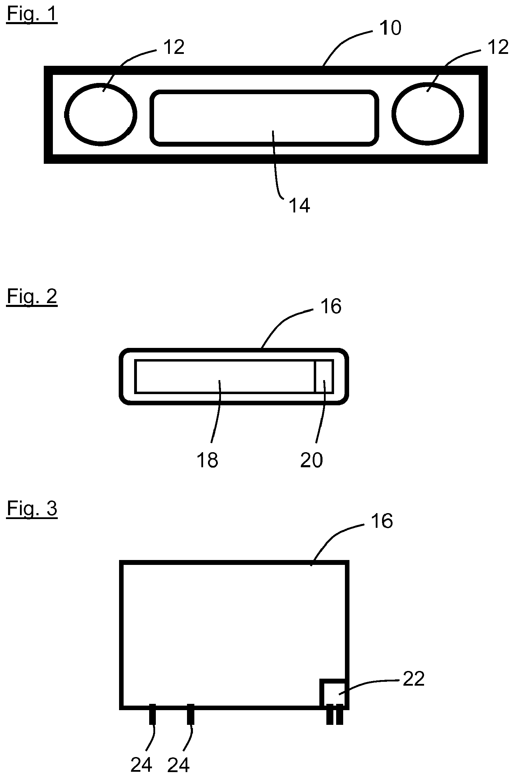

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert. Fig. 1 zeigt einen Adapter 10, welcher in eine Aussparung eines Gehäuses eines Schaltschranks eingesetzt werden kann bzw. fest mit dem Gehäuse verbunden ist. Der Adapter 10 kann einen oder mehrere, z.B. zwei, Reedschalter 12 aufweisen. Dadurch wird insbesondere eine wasserdichte Bedienung ermöglicht.

Ferner kann der Adapter 10 eine Aussparung 14 für eine Steuerungseinheit 16, welche in Fig. 2 gezeigt ist, aufweisen.

Die Steuerungseinheit 16 kann eine Elektronik 18 und einen Anschluss 20, z.B. einen Dateneingang und/oder Datenausgang, aufweisen. Insbesondere kann die Steuerungseinheit 16 einen ovalen und/oder rechteckförmigen Querschnitt aufweisen. Die Länge kann z.B. zwischen 2 cm und 20 cm, vorzugsweise zwischen 10 cm und 15 cm, betragen.

Die Abmessung der Steuerungseinheit 16 kann der Abmessung der Aussparung 14 entsprechen. So kann die Steuerungseinheit 16 in die Aussparung 14 eingesetzt, z.B. eingesteckt, und befestigt werden.

Die Steuerungseinheit 16 kann, wie in der Seitendarstellung in Fig. 3 ersichtlich ist, eine Sicherung 22 aufweisen. Die Sicherung 22 kann insbesondere austauschbar sein. Beispielsweise kann die Sicherung 22 über eine Steckverbindung mit der Steuerungseinheit 16 verbunden sein.

Die Steuerungseinheit 16 kann Kontaktierungen 24 aufweisen, welche mit dem Adapter 10 bzw. dem Hochspannungsbereich des Schaltschranks elektrisch verbunden werden können.

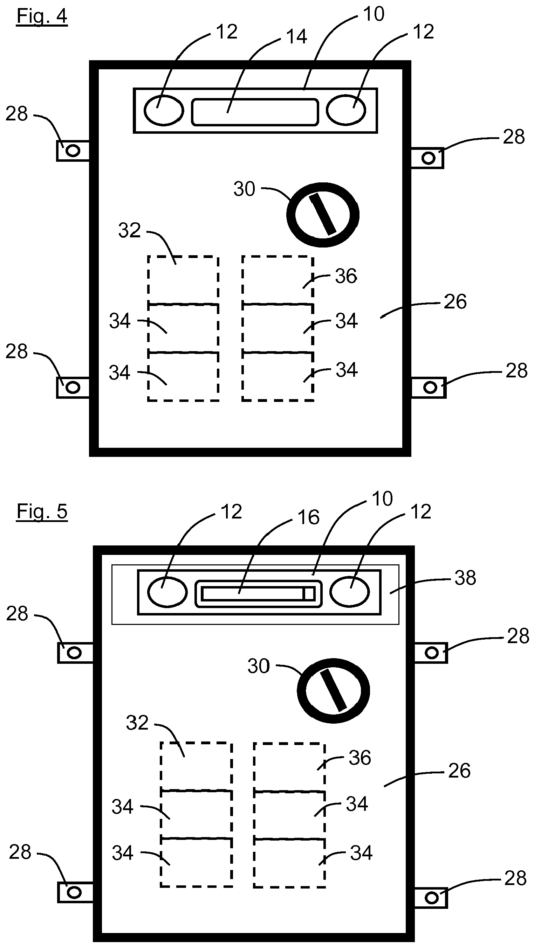

In Fig. 4 ist ein Schaltschrank mit einem Gehäuse gezeigt. Das Gehäuse weist einen Deckel 26 auf, welcher an Laschen 28 festgeschraubt werden kann.

Im Deckel 26 ist eine Aussparung 14 vorgesehen. Die Aussparung 14 ist vom Adapter 10 umgeben.

Am Deckel 26 kann ein On-/Off-Schalter 30 vorgesehen sein.

Im Inneren des Schaltschranks kann, wie mit den gestrichelten Linien dargestellt ist, ein Hauptschalter 32 vorgesehen sein, welcher mit zwei Schütz 34 abgesichert ist.

Ferner kann ein Netzschalter 36 vorgesehen ein, welcher mit zwei Schütz 34 abgesichert ist.

Diese Bauteile befinden sich im Hochspannungsbereich und sind nur zugänglich, indem der Deckel 26 abgenommen wird.

Die Steuerungseinheit 16, welche sich in einem Niederspannungsbereich des Schaltschranks befindet, kann durch die Aussparung 14 hingegen auch bei geschlossenem Deckel 26 eingesetzt werden.

Ist die Steuerungseinheit 16 eingesteckt, wie in Fig. 5 gezeigt ist, kann diese optional, ggf. zusammen mit dem Adapter 10, mit einer Folie 38 abgeklebt werden. Dadurch kann der Schaltschrank wasserdicht gestaltet werden.

### Bezugszeichenliste

- 10: Adapter
- 12: Reedschalter
- 14: Aussparung
- 16: Steuerungseinheit
- 18: Elektronik
- 20: Anschluss
- 22: Sicherung
- 24: Kontaktierung
- 26: Deckel
- 28: Lasche
- 30: On-/Off-Schalter
- 32: Hauptschalter
- 34: Schütz
- 36: Netzschalter
- 38: Folie

## Patentansprüche

1. Gehäuse eines Schaltschranks, umfassend
einen verschließbaren Deckel (26), und
eine Aussparung (14) für eine Steuerungseinheit (16).

2. Gehäuse nach Anspruch 1,
**dadurch gekennzeichnet,**
**dass** die Aussparung (14) derart ausgebildet ist, dass bei verschlossenem Deckel (26) ein Zugriff in einen inneren Teilbereich des Gehäuses ermöglicht ist.

3. Gehäuse nach Anspruch 1 oder 2,
**dadurch gekennzeichnet,**
**dass** die Aussparung (14) im Deckel (26) vorgesehen ist.

4. Gehäuse nach einem der vorhergehenden Ansprüche,
**dadurch gekennzeichnet,**
**dass** im Bereich der Aussparung (14) eine Dichtung vorgesehen ist.

5. Gehäuse nach einem der vorhergehenden Ansprüche,
**dadurch gekennzeichnet,**
**dass** im Bereich der Aussparung (14) ein Adapter (10) vorgesehen ist.

6. Gehäuse nach Anspruch 5,
**dadurch gekennzeichnet,**
**dass** der Adapter (10) wenigstens einen Reedschalter (12) umfasst.

7. Gehäuse nach Anspruch 5 oder 6,
**dadurch gekennzeichnet,**
**dass** der Adapter (10) wenigstens eine Kontaktierungsvorrichtung für eine Steuerungseinheit (16) umfasst.

8. Schaltschrank, umfassend ein Gehäuse nach einem der vorhergehenden Ansprüche und eine Steuerungseinheit (16).

9. Schaltschrank nach Anspruch 8,
**dadurch gekennzeichnet,**
**dass** die Steuerungseinheit (16) kurzschlussfest, selbstüberwachend und/oder wasserdicht ausgebildet ist.

10. Schaltschrank nach Anspruch 8 oder 9,
**dadurch gekennzeichnet,**
**dass** eine Befestigungsvorrichtung zum Befestigen der Steuerungseinheit (16) in der Aussparung (14) und/oder in einem Adapter (10) im Bereich der Aussparung (14) vorgesehen ist, insbesondere wobei die Befestigungsvorrichtung eine Einhänge-, Klammer-, Klemm-, Steck-, Rast-, Magnet-, Zapfen- und/oder Schraubvorrichtung umfasst.
